# EUROPEAN PATENT APPLICATION

(11) **EP 4 552 945 A1**
(43) Date of publication of application: **14.05.2025**
(21) Application number: 24211707.5
(22) Date of filing: 08.11.2024
(51) Int. Cl.: B62B 7/14, B62B 7/06, B62B 9/26

(54) **CHILD CARRYING DEVICE**

(30) Priority: 08.11.2023 CN 202311486733; 23.04.2024 CN 202410494529; 16.08.2024 CN 202411132656
(71) Applicant: Wonderland Switzerland AG, 6312 Steinhausen (CH)
(72) Inventor: ZHONG, Zhiren, Dongguan, 523648 (CN); LI, Fangming, Dongguan, 523648 (CN)
(74) Representative: Müller-Boré & Partner Patentanwälte PartG mbB

(57) **Abstract**

A child carrying device (1) includes: a frame (10); a connecting base (30) pivotally connected to the frame (10); and a connecting base retracting mechanism (50) connected between the frame (10) and the connecting base (30), and including a linkage member (520) and a drive member (5100) pivotally connected to each other, to allow the connecting base (30) to retract with retraction of the frame (10) and deploy with deployment of the frame (10). A first end (522) of the linkage member (520) is pivotally connected to a front leg assembly (130) of the frame (10), and a second end (524) of the linkage member (10) is pivotally connected to a handlebar assembly (120) of the frame (10); and a first end (512) of the drive member (10) is pivotally connected to the connecting base (30), and a second end (514) of the drive member (510) is pivotally connected to the linkage member (520). The child carrying device (1) according to the present disclosure can avoid loss of the connecting base (30) and ensure the retracted state of the frame (10) to avoid accident deployment.

## Description

### TECHNICAL FIELD

The present disclosure relates to a child carrying device.

### BACKGROUND

Child carrying devices, such as strollers or child dining chairs, can alleviate fatigue caused by holding babies for a long time and improve comfort of people's life. Frames of the child carrying devices are usually designed to be foldable, so that they can be stored and carried conveniently when not in use, and reducing volumes occupied by the child carrying devices when in storage. However, the existing child carrying devices can still be opened freely in a folded state, causing many inconveniences.

In addition, child carrying devices on the market are usually provided with connecting bases to attach seats, baby baskets and the like to the frames of the child carrying devices, and hence the connecting bases are usually detachable. Consequently, the connecting bases are easily lost after being removed, causing inconvenience for reuse.

### SUMMARY

Accordingly, the present disclosure aims to provide a child carrying device as well as a connecting base retracting structure and a frame retraction locking structure of the child carrying device, in order to avoid an incident of losing the connecting base, and ensure a retracted state of the frame, avoiding accidental deployment.

To this end, according to a technical solution of the present disclosure, a connecting base retracting mechanism is provided, which is connected between a frame of a child carrying device and a connecting base of the child carrying device. The connecting base retracting mechanism includes a linkage member and a drive member pivotally connected to each other, to allow the connecting base to retract with retraction of the frame and deploy with deployment of the frame.

According to an embodiment, a first end of the linkage member is pivotally connected to a front leg assembly of the frame, and a second end of the linkage member is pivotally connected to a handlebar assembly of the frame; and a first end of the drive member is pivotally connected to the connecting base, and a second end of the drive member is pivotally connected to the linkage member.

According to an embodiment, the first end of the linkage member is pivotally connected to the front leg assembly of the frame, and the second end of the linkage member is pivotally connected to the handlebar assembly of the frame; and the first end of the drive member is pivotally connected to the connecting base, and the second end of the drive member is pivotally connected to the handlebar assembly.

According to an embodiment, the first end of the linkage member is pivotally connected to the front leg assembly of the frame, and the second end of the linkage member is pivotally connected to the handlebar assembly of the frame; and the first end of the drive member is pivotally connected to the connecting base, and the second end of the drive member is pivotally connected to the front leg assembly.

According to another aspect of the present disclosure, a child carrying device is provided, including a frame; a connecting base pivotally connected to the frame; and the above connecting base retracting mechanism.

According to an embodiment, the frame includes: a handlebar assembly, including a handlebar upper part and a handlebar lower part pivotally connected to each other; a front leg assembly, including a front leg upper part and a lower front leg pivotally connected to each other, the front leg assembly being pivotally connected to the handlebar assembly; and a rear leg, pivotally connected to the handlebar assembly and the front leg assembly. A linkage member of the connecting base retracting mechanism is connected between the front leg lower part and the handlebar lower part.

According to an embodiment, a first end of a drive member of the connecting base retracting mechanism is pivotally connected to the connecting base, and a second end of the drive member is pivotally connected to the linkage member.

According to an embodiment, the handlebar upper part and the front leg upper part are pivotally connected at a first pivot point; the handlebar upper part and the handlebar lower part are pivotally connected at a second pivot point; the front leg upper part, the front leg lower part, and the rear leg are pivotally connected at a third pivot point; the front leg lower part and a first end of the linkage member are pivotally connected at a fourth pivot point; the handlebar lower part and the rear leg are pivotally connected at a fifth pivot point; the handlebar lower part and a second end of the linkage member are pivotally connected at a sixth pivot point; the second end of the drive member and the linkage member are pivotally connected at a seventh pivot point; and the first end of the drive member and the connecting base are pivotally connected at an eighth pivot point. During retraction of the frame, the first pivot point to the sixth pivot point perform associated movement and retraction, and associated movement and retraction of the drive member and the connecting base are driven by the seventh pivot point and the eighth pivot point.

According to an embodiment, the connecting base is pivotally connected to an inner side of the third pivot point.

According to an embodiment, the first end of the drive member of the connecting base retracting mechanism is pivotally connected to the connecting base, and the second end of the drive member pivotally connected to the handlebar lower part.

According to an embodiment, the first end of the drive member of the connecting base retracting mechanism is pivotally connected to the connecting base, and the second end of the drive member pivotally connected to the handlebar upper part.

According to an embodiment, the first end of the drive member of the connecting base retracting mechanism is pivotally connected to the connecting base, and the second end of the drive member pivotally connected to the front leg lower part.

According to an embodiment, the first end of the drive member of the connecting base retracting mechanism is pivotally connected to the connecting base, and the second end of the drive member pivotally connected to the front leg upper part.

According to still another aspect of the present disclosure, a frame retraction locking mechanism is provided, including: a fixing base located on one of the front leg assembly and the handlebar assembly of the frame of the child carrying device; and a retraction locking member pivotally connected to the other of the front leg assembly and the handlebar assembly and configured to accommodate the fixing base when the frame is retracted.

According to an embodiment, the fixing base protrudes outward along a left-right direction of the frame.

According to an embodiment, the retraction locking member includes: a snapping portion configured to accommodate the fixing base when the frame is retracted; and a pivoting portion, the snapping portion and the pivoting portion being at opposite two ends of the retraction locking member, and the retraction locking member being pivotally connected to the other of the front leg assembly and the handlebar assembly via the pivoting portion.

According to an embodiment, the retraction locking member further includes: a pressure applying portion arranged at an outer periphery of the pivoting portion.

According to an embodiment, the pressure applying portion is inclined downward in a direction pivoting toward the fixing base, to make it convenient for an operator to apply force in a direction pivoting away from the fixing base through the pressure applying portion.

According to an embodiment, an anti-slipping rib is provided on an inclined surface of the pressure applying portion.

According to an embodiment, the retraction locking member further comprises a limiting slot which is provided on an inner side surface of the retraction locking member and is an arc-shaped slot around a pivot axis.

According to an embodiment, the frame retraction locking mechanism further includes: an elastic member configured to cause the retraction locking member to always pivot in a direction toward the fixing base to accommodate the fixing base.

According to another aspect, the frame retraction locking mechanism includes: a cushion block, located on one of the front leg assembly and the handlebar assembly of the frame of the child carrying device; and a groove, located on the other of the front leg assembly and the handlebar assembly of the frame of the child carrying device, and configured to be fitted with the cushion block to lock the frame in a retracted state during retraction of the frame.

The groove is located on an inner side surface of a front leg upper part of the front leg assembly and provided with a first stop; the cushion block is on an outer side surface of a handlebar upper part of the handlebar assembly and provided with a second stop; and the second stop passes over the first stop and engages with the first stop to lock the frame in the retracted state during retraction of the frame.

The present disclosure further provides a child carrying device, including a frame; and the frame retraction locking mechanism as mentioned, configured to lock the frame in a retracted state.

According to an embodiment, the frame includes: a handlebar assembly including a handlebar upper part and a handlebar lower part pivotally connected to each other; a handlebar base on the handlebar lower part; a front leg assembly, including a front leg upper part and a front leg lower part pivotally connected to each other, the front leg assembly being pivotally connected to the handlebar assembly; and a rear leg, pivotally connected to the handlebar assembly and the front leg assembly. The fixing base of the frame retraction locking mechanism is arranged on one of the front leg upper part and the handlebar base, while the retraction locking member of the frame retraction locking mechanism is arranged on the other of the front leg upper part and the handlebar base.

According to an embodiment, one of the front leg upper part and the handlebar base includes: a mounting recess, a pivoting portion of the frame retraction locking mechanism being pivotally connected to the mounting recess; and a limiting member arranged in the mounting recess to limit a pivot angle of the pivoting portion.

According to an embodiment, one end of an elastic member of the frame retraction locking mechanism is fixed to one of the front leg upper part and the handlebar base, while the other end of the elastic member abuts against the retraction locking member.

According to an embodiment, the limiting member is in the form of a protruding column.

According to an embodiment, the elastic member is a torsion spring.

According to an embodiment, the child carrying device further includes a tray, located between rods at left and right sides of the handlebar assembly and configured to rotate with the retraction of the frame; and a frame gripping mechanism arranged on the tray. The frame has a deployed state and a retracted state, and the frame gripping mechanism is hidden at a bottom side of the tray in the deployed state of the frame.

According to an embodiment, the frame gripping mechanism includes a main body extending along a left-right direction of the frame, and two ends of the main body are fixed to the bottom side of the tray via two connecting portions.

Since the child carrying device according to the present disclosure is provided with the connecting base retracting mechanism, after a connected child car seat, a baby basket and the like are removed, the connecting base is still fixed to the frame of the child carrying device. Moreover, the connecting base can preform associated movement and retraction during retraction of the frame and hence will not lose, and will not occupy additional space. The child carrying device is also provided with the frame retraction locking structure, and the frame retraction locking mechanism according to the present disclosure has a simple and compact structure, does not occupy additional space, and ensures the retracted state of the frame to avoid accidental deployment.

### BRIEF DESCRIPTION OF THE DRAWINGS

The accompanying drawings are included herein to provide further understanding of the present disclosure, and are incorporated into and constitute a part of this specification. The drawings illustrate embodiments of the present disclosure and, together with the following description, serve to explain principles of the present disclosure.

In the drawings:
FIG. 1 is a schematic view of a child carrying device according to the present disclosure, in which a baby basket is mounted on a frame;
FIG. 2 is a schematic view of a child carrying device according to the present disclosure, showing a situation after a baby basket is removed;
FIG. 3 is a schematic view of a child carrying device according to the present disclosure, in which a connecting base begins to retract along with the frame;
FIG. 4 is a schematic view of a child carrying device according to the present disclosure, in which a connecting base is already in a retracted state along with the frame;
FIG. 5 is a structural schematic view of a connecting base retracting mechanism of a child carrying device according to the present disclosure;
FIG. 6 is a structural schematic view of each pivot point of a child carrying device according to the present disclosure;
FIGs. 6A, 6B, and 6C are schematic views of child carrying devices according to other embodiments of present disclosure;
FIG. 7 is a schematic view of a child carrying device according to another embodiment of the present disclosure, in which a frame retraction locking mechanism according to the present disclosure is shown;
FIG. 8 is a partially schematic view of FIG. 7, further showing a structure of a retraction locking member of the frame retraction locking mechanism and a structure related to a handlebar base according to another embodiment of the present disclosure;
FIG. 9 is a schematic view showing a specific structure of a retraction locking member of a frame retraction locking mechanism according to another embodiment of the present disclosure;
FIG. 10 is a schematic view of a child carrying device according to another embodiment of the present disclosure, in which a frame is in a fully retracted state;
FIG. 11 is a schematic view of a child carrying device according to another embodiment of the present disclosure, in which a frame starts to deploy from a retracted state;
FIG. 12 is a schematic view of a child carrying device according to another embodiment of the present disclosure, in which a frame is in a further deployed state;
FIGS. 13A and 13B are schematic views of a child carrying device according to still another embodiment of the present disclosure, in which a structure of another embodiment of a frame retraction locking mechanism according to the present disclosure is shown;
FIG. 14A is a schematic view showing that a child carrying device according to still another embodiment of the present disclosure is about to be fully retracted;
FIG. 14B is a sectional view showing a specific structure of another embodiment of a frame retraction locking mechanism;
FIG. 15 is a schematic view of a child carrying device according to yet another embodiment of the present disclosure, in which a frame is in a fully deployed state;
FIG. 16 is a schematic view of the child carrying device of FIG. 15 from another angle of view, in which a frame gripping mechanism according to the present disclosure is shown;
FIG. 17 is a schematic view of a tray and a frame gripping mechanism of a child carrying device according to yet another embodiment of the present disclosure;
FIG. 18A is a schematic view of a child carrying device according to yet another embodiment of the present disclosure, in which a frame is in a fully retracted state; and
FIG. 18B is a schematic view of the child carrying device of FIG. 17 from another angle of view.

### Reference numerals:

Child carrying device: 1
Baby Basket: 2
Wheel: 20A, 20b
Frame: 10
   Handlebar assembly: 120
      Handlebar base 121
         Mounting recess 1211; Limiting member 1212
      Handlebar upper part 122
      Handlebar lower part 124
      Handlebar grip 126
   Front leg assembly: 130
      Front leg upper part 132; Front leg lower part 134
   Rear leg: 140
Connecting base: 30
   Engaging portion 38
Connecting base retracting mechanism: 50
   Drive member: 510
      First end 512; Second end 514
   Linkage member: 520
      First end 522; Second end 524
First pivot point: S1
Second pivot point: S2
Third pivot point: S3
Fourth pivot point: S4
Fifth pivot point: S5
Sixth pivot point: S6
Seventh pivot point: S7
Eighth pivot point: S8
Ninth pivot point: S9
Frame retraction locking mechanism: 60
   Fixing base: 610
   Retraction locking member: 620
      Snapping portion 621; Pivoting portion 622;
      Pressure applying portion 623; Limiting slot 624
   Elastic member: 630
Frame retraction locking mechanism: 60'
   Groove: 610'
      First stop 612'
   Cushion block: 620'
      Second stop 622'
Tray: 70
   First side 701; Second side 702; Front surface 703
   Holding surface: 71
   Fixing hole: 72
Frame gripping mechanism: 80
   Main body 81; Connecting portion 82

### DETAILED DESCRIPTION

Exemplary embodiments will be described below in detail with reference to the accompanying drawings. Although the present disclosure is prone to various modifications and alternatives, specific embodiments are illustrated by way of example in the accompanying drawings. However, the present disclosure should not be construed as being limited to the embodiments set forth herein, but rather the present disclosure covers all modifications, equivalents, and alternatives that fall within the spirit and scope of the embodiments.

The following description is based on a stroller as an example, but it can be understood that a connecting base locking mechanism and a frame retraction locking mechanism according to the present disclosure may also be applied to other types of devices, such as child dining chairs, wheelchairs and so on.

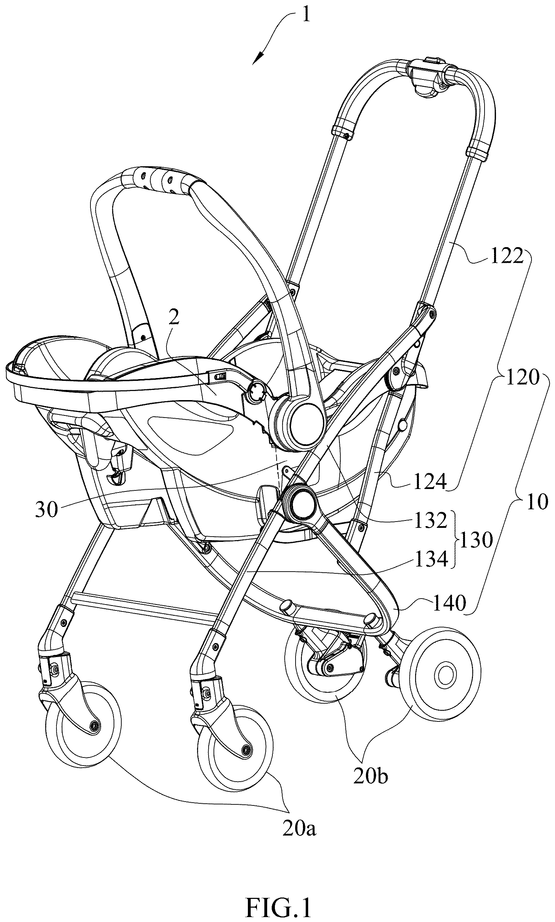

First referring to FIG. 1, which is a schematic view of a child carrying device 1 according to the present disclosure, a main structure of the child carrying device 1 includes a frame 10 and wheels 20a, 20b assembled to the frame 10. The frame 10 of the child carrying device 1 mainly includes a handlebar assembly 120, a front leg assembly 130, and a rear leg 140. In an embodiment shown in this figure, the handlebar assembly 120 includes a handlebar upper part 122 and a handlebar lower part 124 that are pivotally connected to each other; the front leg assembly 130 includes an front leg upper part 132 and a front leg lower part 134 that are pivotally connected to each other; the handlebar assembly 120, the front leg assembly 130, and the rear leg 140 are pivotally connected to each other; and front wheels 20a are assembled to the front leg lower part 134, and rear wheels 20b are assembled to the rear leg 140. In the embodiment shown in this figure, the handlebar upper part 122 and the handlebar lower part 124, as well as the front leg upper part 132 and the front leg lower part 134 are all composed of at least rods respectively arranged at left and right sides of the frame 10. The following description will take only one side as an example. In FIG. 1, a baby basket 2 is detachably mounted to the frame 10 through a connecting base 30, so that the baby basket 2 can be mounted to or removed from the frame 10 as needed. The baby basket 2 shown in this figure can also be other devices, for example a child car seat.

Typically, the connecting base configured to detachably mount the baby basket 2 onto the frame 10 is also detachable. The connecting base can be removed together with the baby basket 2, and mounted onto the frame 10 together with the baby basket 2 when the baby basket 2 needs to be mounted onto the frame 10. Obviously, this connecting base is very easy to lose.

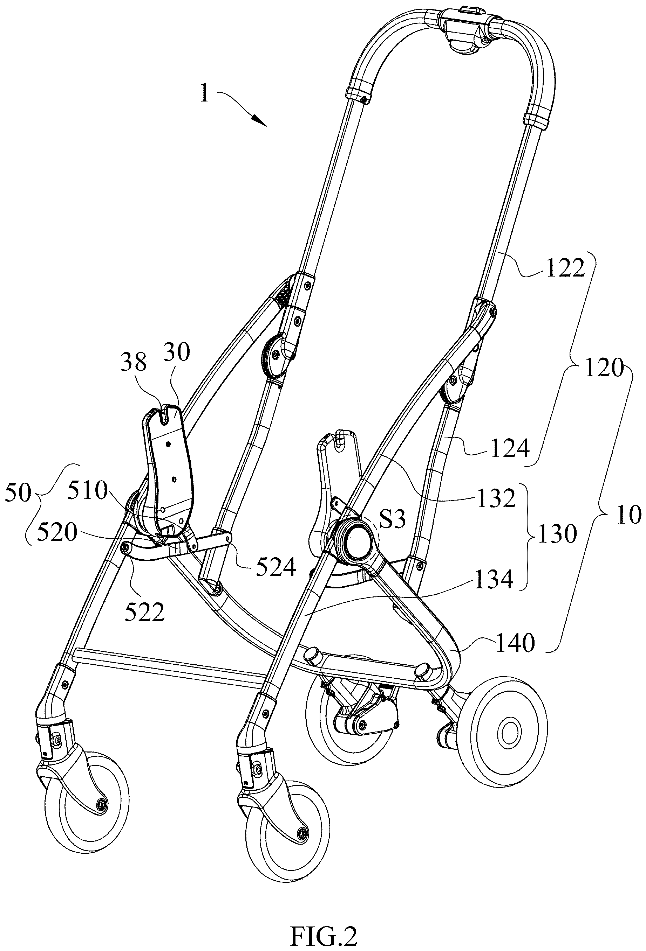

However, the connecting base 30 according to the present disclosure is still fixed on the frame 10 after the baby basket 2 is removed. FIG. 2 is a schematic view of the child carrying device 1 according to the present disclosure, and shows a situation after the baby basket 2 is removed. According to an embodiment shown in this figure, the connecting base 30 is pivotally connected to a third pivot point S3 where the front leg upper part 132, the front leg lower part 134, and the rear leg 140 of the frame 10 are pivotally connected. Even after the baby basket 2 is removed, the connecting base 30 according to the present disclosure is still pivotally connected to the third pivot point S3, thereby avoiding inconvenience caused by loss.

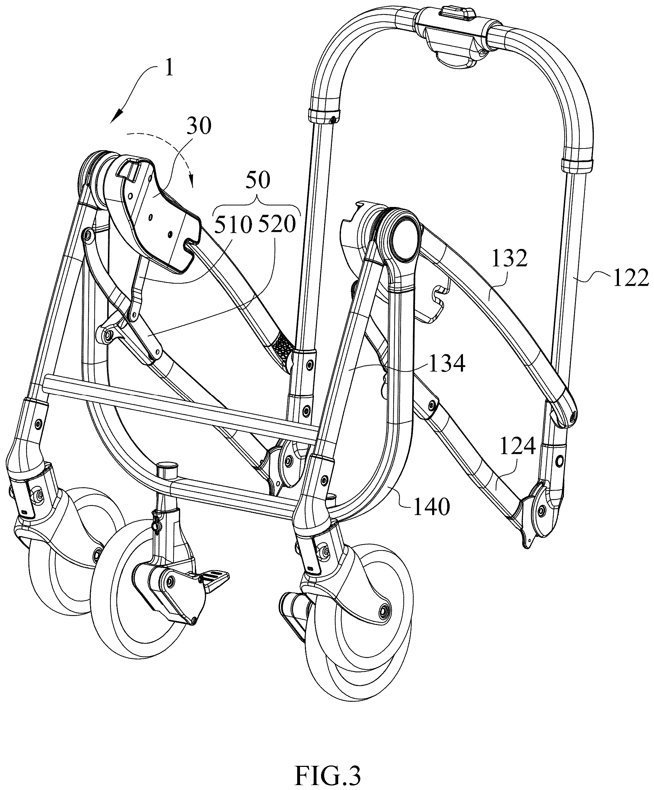

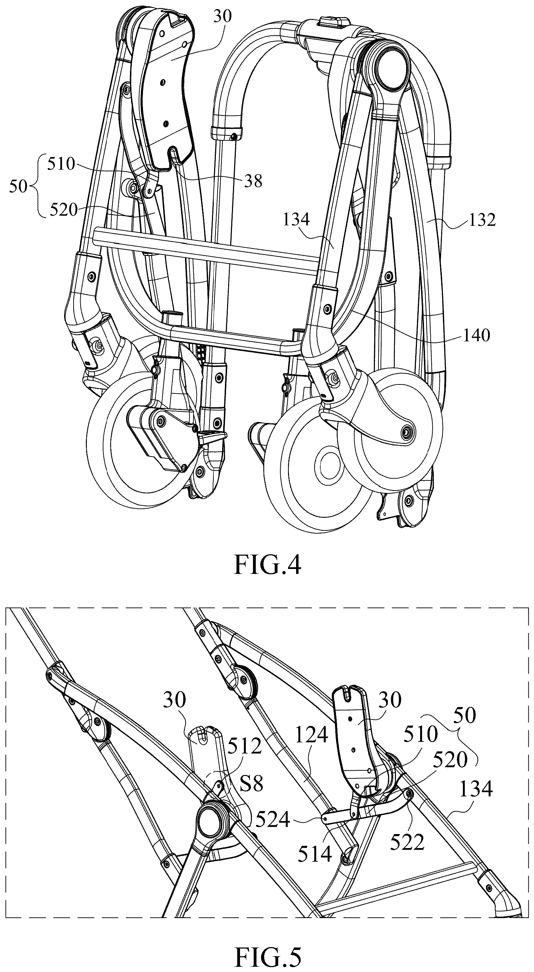

In addition, through a connecting base retracting mechanism 50, the connecting base 30, which is still mounted on the frame 10 after the baby basket 2 is removed, can be retracted as the frame 10 is retracted and be deployed as the frame 10 is deployed. Specifically, as shown in FIG. 3 (which is a schematic view of the child carrying device 1 according to the present disclosure) and FIG. 4, in FIG. 3, when the frame 10 starts to be retracted, the handlebar upper part 122 and the handlebar lower part 124 of the frame 10 pivot and fold relative to each other, and the front leg upper part 132, the front leg lower part 134 and the rear leg 140 of the frame 10 pivot and fold relative to each other, so as to start to retract the frame 10. At the same time, the connecting base retracting mechanism 50 drives the connecting base 30 to start a retraction action as well; in FIG. 4, as the frame 10 is completely retracted, the connecting base retracting mechanism 50 also drives the connecting base 30 to be in a fully retracted state. The retracted connecting base 30 does not occupy additional space and does not increase the volume of the frame 10 in a retracted state.

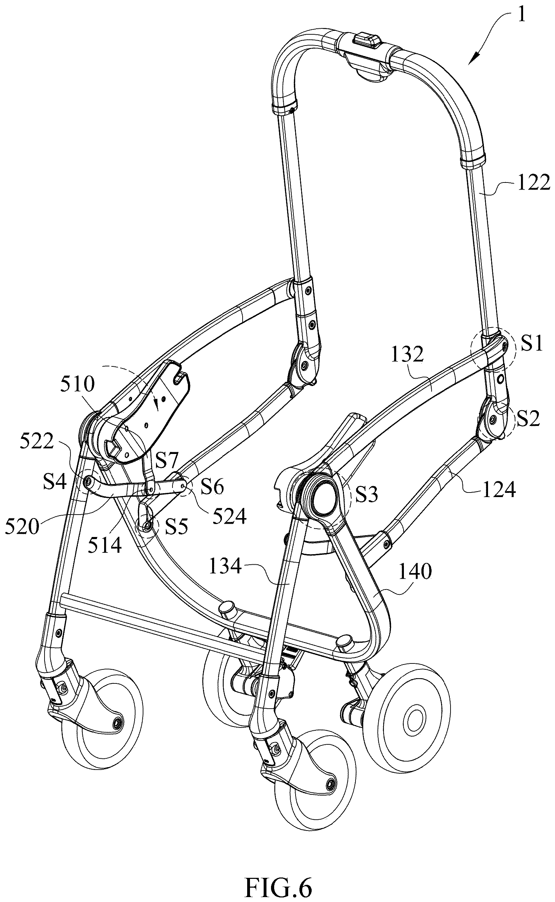

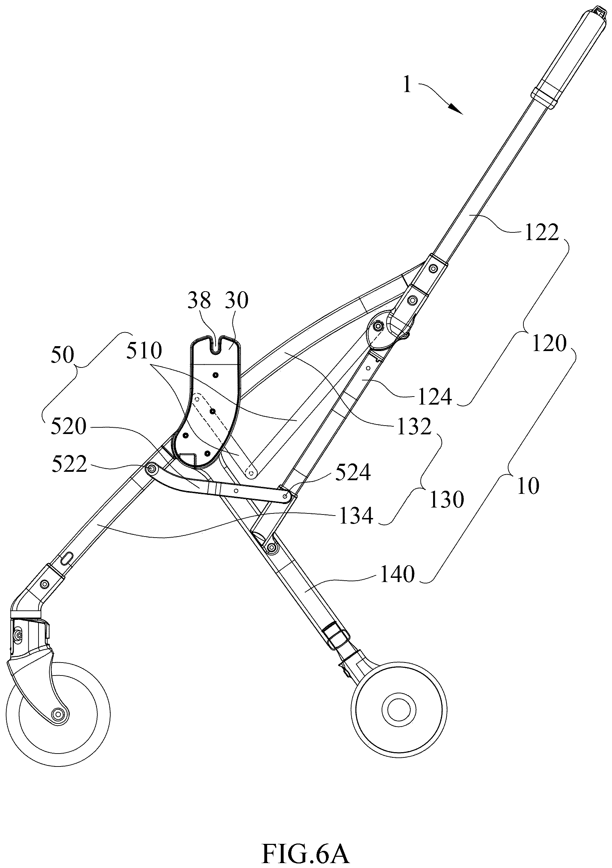

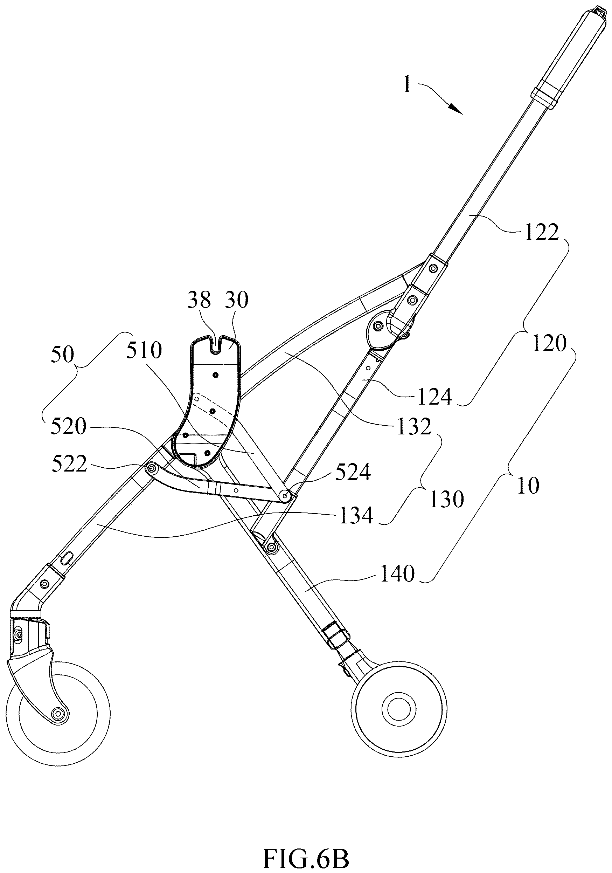

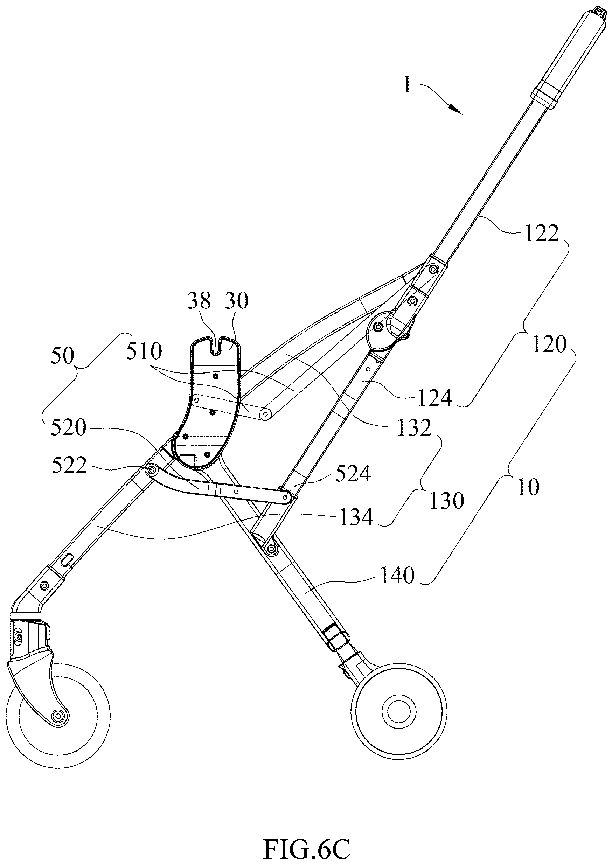

A specific structure of the connecting base retracting mechanism 50 according to the present disclosure will be described below with reference to FIG. 5, which is a structural schematic view of the connecting base retracting mechanism 50 of the child carrying device 1 according to the present disclosure. According to an embodiment shown in this figure, two connecting bases 30 are provided to provide stable and even support for the baby basket 2. The two connecting bases 30 are at the left and right sides of the frame 10, and a pivot point of the connecting base 30 with the frame 10 is above a pivot point S4 (see FIG. 6). Referring to FIG. 5, the pivot point of the connecting base 30 with the frame 10 is at an inner side of the third pivot point S3 where the front leg upper part 132, the front leg lower part 134, and the rear leg 140 are pivotally connected; for example, the pivot point of the connecting base 30 with the frame 10 is coaxial with the pivot point S3. In other embodiments, the pivot point of the connecting base 30 with the frame 10 is located at the front leg upper part 132 or the handlebar lower part 124. Correspondingly, two connecting base retracting mechanisms 50 are provided. The following description will take only one of the connecting base retracting mechanisms 50 as an example, and correspondingly, a pivotal connection relationship at only one side as an example.

The connecting base retracting mechanism 50 includes a drive member 510 and a linkage member 520. A first end 522 of the linkage member 520 is pivotally connected to the front leg assembly 120 of the frame 10, and a second end 524 of the linkage member 520 is pivotally connected to the handlebar assembly 120 of the frame 10. In the embodiment shown in FIG. 5, the first end 522 of the linkage member 520 is pivotally connected to the front leg lower part 134, and the second end 524 of the linkage member 520 is pivotally connected to the handlebar lower part 124. A first end 512 of the drive member 510 is pivotally connected to the connecting base 30, and a second end 514 of the drive member 510 is pivotally connected to the linkage member 520.

According to other embodiments shown in FIG. 6A, FIG. 6B, and FIG. 6C, the second end 514 of the drive member 510 may be pivotally connected to the handlebar assembly 120; for example, the second end 514 of the drive member 510 may be pivotally connected to the handlebar upper part 122 or to the handlebar lower part 124. According to other embodiments not shown, the second end 514 of the drive member 510 may also be pivotally connected to the front leg assembly 130; for example, the second end 514 of the drive member 510 may be pivotally connected to the front leg upper part 132 or to the front leg lower part 134.

The retraction and deploying actions of the frame 10 will drive the drive member 510 and the linkage member 520 of the connecting base retracting mechanism 50 to pivot, and in turn the pivot of the drive member 510 and the linkage member 520 can then drive the connecting base 30 to retract with the retraction of the frame 10 and to extend with the deployment of the frame 10.

An action process of the connecting base retracting mechanism 50 will be exemplified by the second end 514 of the drive member 510 being pivotally connected to the linkage member 520.

Referring to FIG. 6, which is a structural schematic view of each pivot point of the child carrying device 1 according to the present disclosure, according to this embodiment, the handlebar upper part 122 and the front leg upper part 132 are pivotally connected at a first pivot point S1; the handlebar upper part 122 and the handlebar lower part 124 are pivotally connected at a second pivot point S2; and the front leg upper part 132, the front leg lower part 134, and the rear leg 140 are all pivotally connected at the third pivot point S3.

In addition, the front leg lower part 134 and the first end 522 of the linkage member 520 are pivotally connected at a fourth pivot point S4; the handlebar lower part 124 and the rear leg 140 are pivotally connected at a fifth pivot point S5; the handlebar lower part 124 and the second end 524 of the linkage member 520 are pivotally connected at a sixth pivot point S6; the second end 514 of the drive member 510 and the linkage member 520 are pivotally connected at a seventh pivot point S7; and the first end 512 of the drive member 510 and the connecting base 30 are pivotally connected at an eighth pivot point S8.

When force is exerted on the handlebar upper part 122 or the front leg lower part 134 to retract the frame 10, referring to FIGS. 4 and 6, the handlebar upper part 122 and the handlebar lower part 124 pivot and retract toward each other through the second pivot point S2; the front leg upper part 132 and the front leg lower part 134 approach each other through the third pivot point S3; the front leg upper part 132 and the front leg lower part 134 approach the rear leg 140 to pivot and retract through the third pivot point S3; the handlebar upper part 122 and the front leg upper part 132 pivot and retract toward each other through the first pivot point S1; and the handlebar lower part 124 and the rear leg 140 pivot and retract toward each other through the fifth pivot point S5, so that the frame 10 is folded and retracted to the retracted state of the frame as shown in FIG. 4. At the same time, since the handlebar lower part 124 approaches the rear leg 140 to pivot and retract through the fifth pivot point S5; the front leg lower part 134 approaches the rear leg 140 to pivot and retract through the third pivot point S3; and the first end 522 of the linkage member 520 is pivotally connected to the front leg lower part 134 through the fourth pivot point S4, and the second end 524 of the linkage member 520 is pivotally connected to the handlebar lower part 124 through the sixth pivot point S6, so that the pivot and retraction of the handlebar lower part 124 and the front leg lower part 134 will drive the linkage member 520 to approach the front leg lower part 134 to pivot and retract. Also, since the second end 514 of the drive member 510 is pivotally connected to the linkage member 520 through the seventh pivot point S7, the pivot of the linkage member 520 will drive the drive member 510 to pivot and retract. Moreover, since the first end 512 of the drive member 510 is pivotally connected to the connecting base 30 through the eighth pivot point S8, the pivot of the drive member 510 will drive the connecting base 30 to pivot and retract along a direction indicated by an arrow in FIG. 6, and approach the front leg lower part 134, without occupying additional volume. In this embodiment, a lower end of the connecting base 30 is pivotally connected to the frame 10, and an upper end of the connecting base 30 is provided with an engaging portion 38 to mount the baby basket 2. In a deployed state, the engaging portion 38 of the connecting base 30 faces upward (as shown in FIG. 2). Referring to FIG. 4, in the retracted state, the engaging portion 38 of the connecting base 30 faces downward. In the retracted state of the frame 10, the first pivot point S1, the third pivot point S3, and the fifth pivot point S5 are above the second pivot point S2, and the third pivot point S3 and the fifth pivot point S5 are in front of the first pivot point S 1 and the second pivot point S2.

On the contrary, when the frame 10 is deployed, as the handlebar upper part 122, the handlebar lower part 124, the front leg upper part 132, the front leg lower part 134, and the rear leg 140 are deployed away from each other, the linkage member 520 and the drive member 510 are driven to pivot and deploy in a reverse direction through the seventh pivot point S7 and the eighth pivot point S8, thereby driving the connecting base 30 to pivot and deploy upward to connect the baby basket 2. As a result, even when the baby basket 2 is removed, the connecting base 30 is still mounted on the frame 10, avoiding loss of the connecting base. At the same time, through the connecting base retracting mechanism 50, the connecting base 30 can be retracted with the retraction of the frame 10 and extend with the deployment of the frame 10, which is convenient to use and will not increase the volume of the frame 10 in the folded state.

The child carrying device 1 according to the present disclosure may also be provided with a frame retraction locking mechanism 60 to lock the frame 10 in the retracted state and prevent the frame from being deployed arbitrarily.

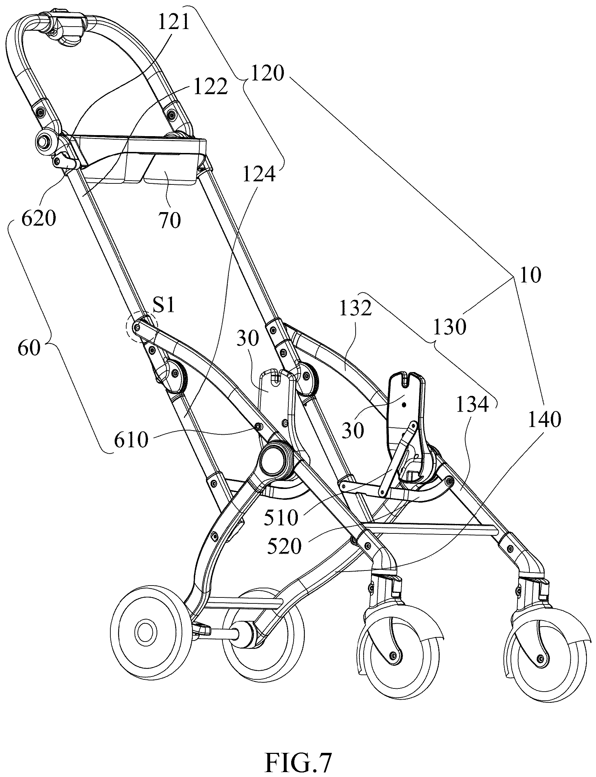

The frame locking mechanism 60 according to the present disclosure will be described below with reference to FIGS. 7 to 12. The child carrying device of FIGS. 7 to 12 is roughly identical to the child carrying device of FIGS. 1 to 6, and only differences will be explained below. FIG. 7 is a schematic view of the frame retraction locking mechanism 60 according to another embodiment of the present disclosure. The frame retraction locking mechanism 60 mainly includes a fixing base 610 and a retraction locking member 620. The fixing base 610 may be arranged on one of the front leg assembly 130 and the handlebar assembly 120 of the frame 10; correspondingly, the retraction locking member 620 may be arranged on the other of the front leg assembly 130 and the handlebar assembly 120 of the frame 10. When the frame 10 is in a fully retracted state, the fixing base 610 may be accommodated in the retraction locking member 620, thereby locking the frame 10 in the retracted state and avoiding accidental deployment of the frame 10. The frame retraction locking mechanism 60 may be arranged at one side (such as the right side) of the frame 10, or may be arranged at each of both sides (such as the left and right sides) of the frame 10. The following is an example where the frame retraction locking mechanism 60 is arranged at one side of the frame 10, the fixing base of the frame retraction locking mechanism 60 is arranged on the front leg assembly 130, and the retraction locking member 620 of the frame retraction locking mechanism 60 is arranged on the handlebar assembly 120.

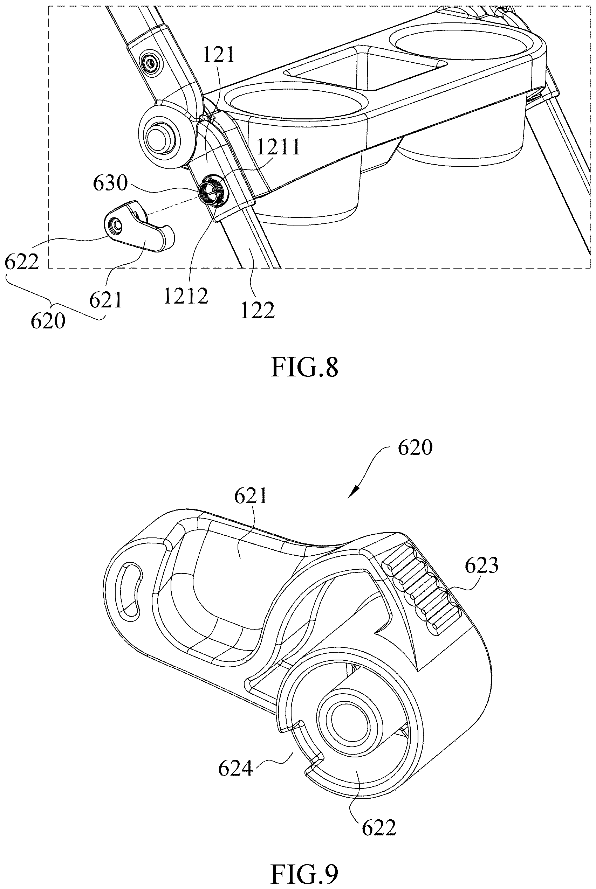

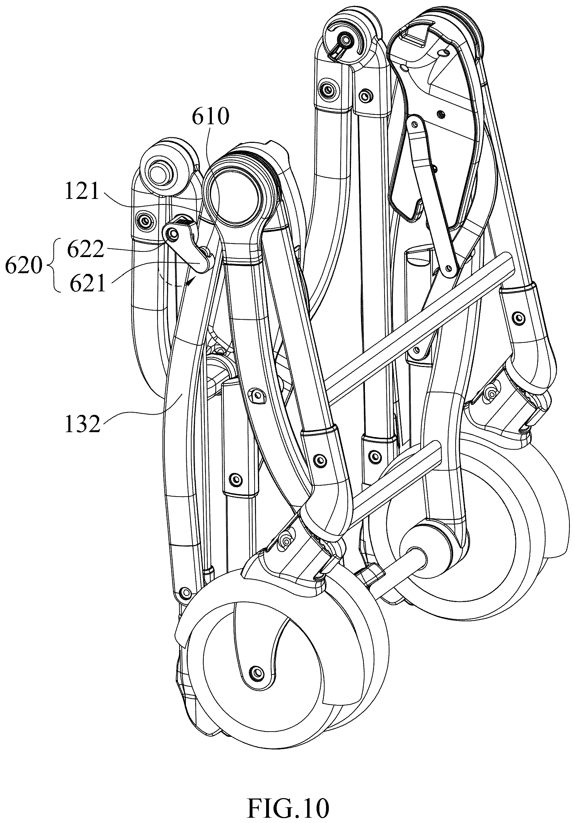

In the embodiment shown in FIG. 7, the fixing base 610 of the frame retraction locking mechanism 60 is arranged on the front leg upper part 132; the retraction locking member 620 of the frame retraction locking mechanism 60 is arranged on the handlebar upper part 122; and the handlebar upper part 122 and the front leg upper part 132 are pivotally connected at the first pivot point S 1. When the frame 10 is retracted, the handlebar upper part 122 and the front leg upper part 132 approach each other. For example, the fixing base 610 may protrude outward along a left-right direction of the frame 10. In addition to the handlebar upper part 122 and the handlebar lower part 124 that are pivotally connected to each other, the handlebar assembly 120 also includes a handlebar base 121, and a tray 70 configured to accommodate items such as water bottles is connected to the frame 10 through the handlebar base 121. There are usually two handlebar bases 121 respectively arranged at the left and right sides of the frame 10. The following description will take the handlebar base 121 at one side as an example. As shown in FIG. 7, the handlebar base 121 is arranged on the handlebar upper part 122, and the retraction locking member 620 of the frame retraction locking mechanism 60 is arranged on the handlebar base 121. Specifically, referring to FIG. 8, which is a partially schematic view of FIG. 7, it further shows a structure of the retraction locking member 620 of the frame retraction locking mechanism 60 and a structure related to the handlebar base 121 according to another embodiment of the present disclosure. An outer side surface of the handlebar base 121 is provided with a mounting recess 1211, and a limiting member 1212 is provided in the mounting recess 1211 to limit a pivot angle of a snapping portion 621 to avoid excessive rotation. The limiting member 1212 may be in the form of a protruding column; for example, the limiting member 1212 is a protruding column integrally formed on the outer side surface of the handlebar base 121. Correspondingly, a limiting slot 624 (shown in FIG. 9) is provided on an inner side surface of the retraction locking member 620 and is an arc-shaped slot around a pivot axis, and the limiting member 1212 is accommodated in the limiting slot 624 in a relatively movable manner. Referring to FIG. 9, which is a schematic view showing a specific structure of the retraction locking member 620 of the frame retraction locking mechanism 60 according to the present disclosure, in addition to the limiting slot 624 mentioned above, the retraction locking member 620 also includes the snapping portion 621 and a pivoting portion 622, and the snapping portion 621 and the pivoting portion 622 are located at opposite two ends of the retraction locking member 620. The retraction locking member 620 is mounted in the mounting recess 1211 through the pivoting portion 622. After the frame 10 is folded, the fixed base 610 is accommodated in the snapping portion 621 of the retraction locking member 620, thereby locking the frame 10 in the retracted state. The frame retraction locking mechanism 60 according to the present disclosure further includes an elastic member 630 (shown in FIG. 8). In the embodiment shown in this figure, the elastic member 630 is a torsion spring, one end of which is fixed in the mounting recess 1211 of the handlebar base 121, and the other end of which abuts against the retraction locking member 620, for example, against the pivoting portion of the retraction locking member 620. The elastic member 630 is configured to cause the retraction locking member 620 to always pivot in a direction toward the fixing base 610 (i.e., a direction indicated by an arrow in FIG. 10) to accommodate the fixing base 610.

In addition, as shown in FIG. 9, the retraction locking member 620 is also provided with a pressure applying portion 623. The pressure applying portion 623 is arranged at an outer periphery of the pivoting portion 622 and is inclined downward in a direction pivoting toward the fixing base 610, so that an operator can apply force in a direction pivoting away from the fixing base 610 through the pressure applying portion 623. For example, the operator may push the inclined pressure applying portion 623 with his or her thumb, to push the snapping portion 621 to pivot in the direction away from the fixing base 610 (a reverse direction of the direction indicated by the arrow shown in FIG. 10), thereby unlocking the fixing base 610 from the snapping portion 621. As shown in FIG. 9, anti-slipping ribs may also be provided on an inclined surface of the pressure applying portion 623.

In embodiments not shown, the mounting recess 1211 and the limiting member 1212 may also be arranged on the front leg upper part 132, while the fixing seat 610 is arranged on the handlebar base 121. Correspondingly, the retraction locking member 620 is arranged on the front leg upper part 132. One end of the elastic member 630 is fixed to the front leg upper part 132, while the other end of the elastic member 630 abuts against the retraction locking member 620. Certainly, the retraction locking member 620 as well as the mounting recess 1211 and the limiting member 1212 corresponding thereto, and the fixing base 610 may also be arranged in other positions, as long as positions of the fixing base 610 and the retraction locking member 620 after retraction correspond to each other, so that the fixing base 610 may be accommodated in the retraction locking member 620.

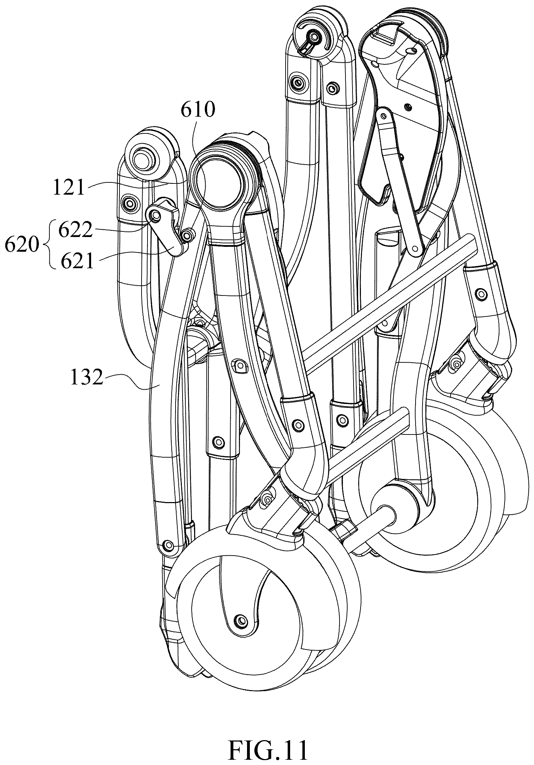

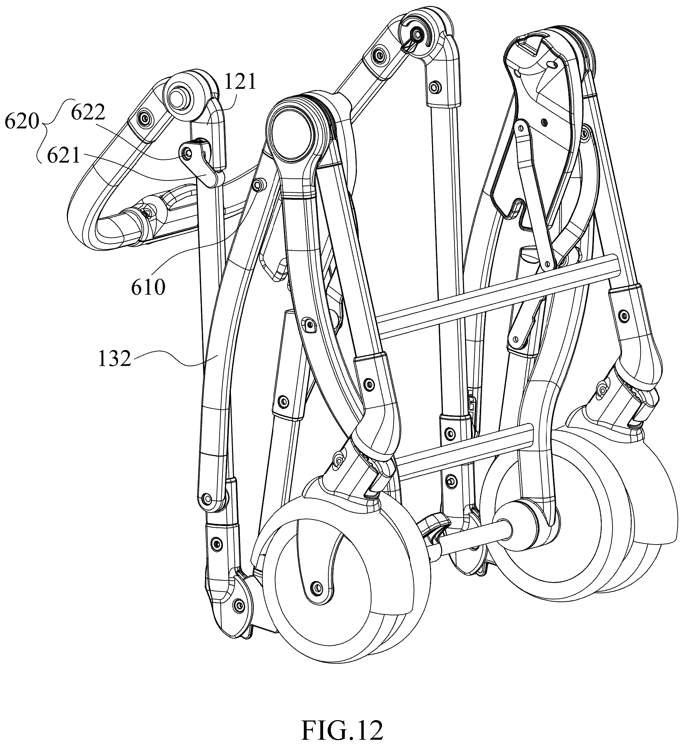

An action process of the frame retraction locking mechanism 60 according to the present disclosure will be exemplified by the fixing base 610 being arranged on the front leg upper part 132 and the retraction locking member being arranged on the handlebar upper part 122. Referring to FIGS. 10, 11, and 12, FIG. 10 shows that the frame 10 is in a fully retracted state; FIG. 11 shows that the frame 10 starts to deploy from the retracted state; and FIG. 12 shows that the frame 10 is in a further deployed state.

As shown in FIG. 10, in the fully retracted state of the frame 10, the fixing base 610 on the front leg upper part 132 is accommodated in the snapping portion 621 of the retraction locking member 620 on the handlebar upper part 122, and under an action of the elastic member 630, the snapping portion 621 always pivots in the direction toward the fixing base 610 (as indicated by the arrow in this figure), so that the snapping portion 621 blocks a path of the fixing base 610 moving along with the deployment of the frame 10, thereby preventing the frame 10 from deploying. Therefore, it is possible to ensure locking of the retracted state of the frame 10, and avoid accidental deployment of the frame 10.

As shown in FIG. 11, when the frame 10 needs to be deployed, the pressure applying portion 623 (shown in FIG. 9) may be pushed with the thumb to overcome an elastic force of a torsion spring, and the snapping portion 621 is pushed to pivot in the reverse direction of the direction indicated by the arrow shown in FIG. 10. As a result, the snapping portion 621 gradually and completely leaves the fixing base 610, the retraction-locked state of the frame 10 is released, and the operator can deploy the frame 10 at will. FIG. 12 shows that the frame 10 is further deployed, with the snapping portion 621 further away from the fixing base 610.

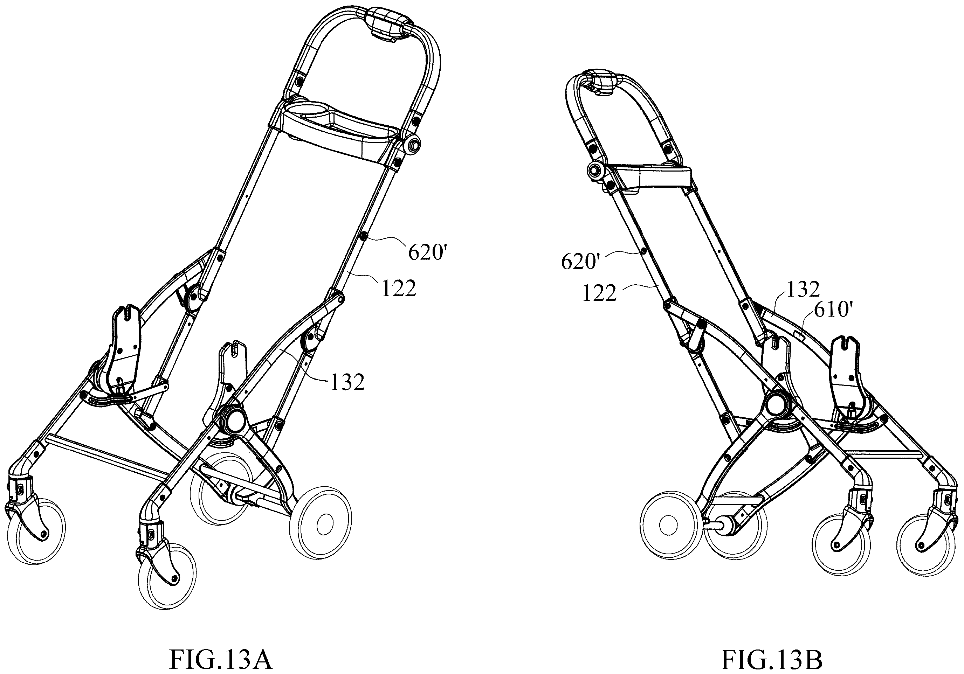

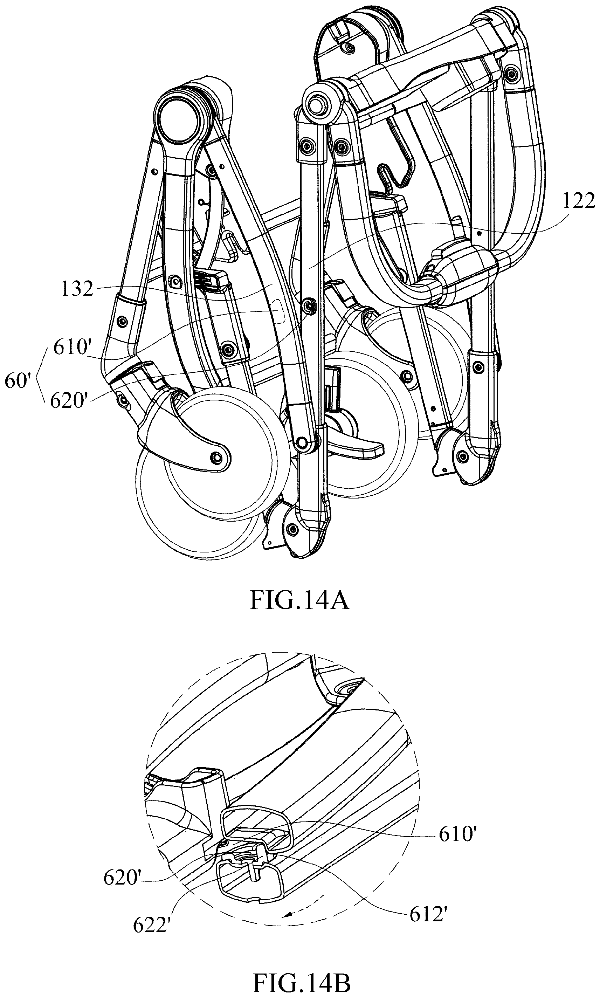

A structure of another embodiment of a frame retraction locking mechanism 60' according to the present disclosure will be described below with reference to FIGS. 13A and 13B, as well as FIGS. 14A and 14B.

First referring to FIGS. 13A and 13B, which are schematic views of a child carrying device according to still another embodiment of the present disclosure, the frame retraction locking mechanism 60' according to still another embodiment includes a cushion block 620' and a groove 610'. For ease of illustration, the cushion block 620' located at one side is shown in FIG. 13A, while the groove 610' fitted with the cushion block 620' is shown in FIG. 13B. The cushion block 620' and the groove 610' that are fitted with each other may be provided at each of two sides of the child carrying device, or may be provided at only one side of the child carrying device. According to the embodiment shown in the figures, the cushion block 620' of the frame retraction locking mechanism 60' is arranged on an outer side surface of the handlebar upper part 122, while the corresponding groove 610' is arranged on an inner side surface of the front leg upper part 132. However, the present disclosure is not limited thereto. For example, the groove 610' may be arranged on the outer side surface of the handlebar upper part 122, while the cushion block 620' is arranged on the inner side surface of the front leg upper part 132.

Referring again to FIG. 14A, it is a schematic view of a child carrying device that is about to be fully retracted according to another embodiment of the present disclosure. As shown in this figure, as the frame is retracted, the cushion block 620' gradually approaches the groove 610', and when the frame is fully retracted, the cushion block 620' is fitted with the groove 610' to lock the frame in the retracted state and prevent the frame from coming loose and disengaging. Specifically, referring to FIG. 14B, this figure is a sectional view showing a specific structure of another embodiment of the frame retraction locking mechanism. The groove 610' is provided with a first stop 612', and correspondingly, the cushion block 620' is provided with a second stop 622'. Specifically, according to the embodiment shown in FIGS. 14A and 14B, the groove 610' is formed by recessing inward at a substantially central position of the front leg upper part 132, but is not limited thereto. The groove 610' may also be formed at a slightly upper position of the front leg upper part 132. The groove 610' is, for example, an elongated groove, whose long edges extend along a longitudinal direction of the front leg upper part 132. A side of the groove 610' near the ground is defined as an inner side, and an opposite side is defined as an outer side. In such a case, the first stop 612' may be formed on a long edge of the groove 610' close to the outer side, and the first stop 612' smoothly transitions to the front leg upper part 132, so that the corresponding second stop 622' may slide over the first stop 612'. A long edge of the groove 610' close to the inner side may be flush with the surface of the front leg upper part 132 or be recessed relative to the surface of the front leg upper part 132. The long edge of the groove 610' close to the outer side, which forms the first stop 612', may slightly protrude relative to the surface of the front leg upper part 132 or may be flush with the surface of the front leg upper part 132. For example, the cushion block 620' may be a fixed washer protruding outward from the outer side surface of the handlebar upper part 122. When retracted, a side of the cushion block 620' close to the front leg upper part 132 is defined as an inner side, and a side of the cushion block 620' away from the front leg upper part 132 is defined as an outer side. In such a case, the second stop 622' is arranged at the outer side of the cushion block 620', protrudes more from the outer side of the handlebar upper part 122 relative to the overall cushion block 620', and smoothly transitions to the rest of the cushion block 620'. The second stop 622' extends along a longitudinal direction of the handlebar upper part 122, and when the frame is retracted, the second stop 622' passes over the first stop 612' in a direction substantially perpendicular to the longitudinal direction of the handlebar upper part 122, that is, an extension direction of the second stop 622' is substantially perpendicular to a direction in which it passes over the first stop 612'. The second stop portion 622' is for example formed by an elastomer, and thus has a certain degree of deformability.

When the frame 10 is retracted, the handlebar upper part 122 pivot toward the front leg upper part 132. Correspondingly, the cushion block 620' on the handlebar upper part 122 gradually approaches the groove 610' on the front leg upper part 132. When the frame is fully retracted, the second stop 622' of the cushion block 620' passes over the first stop 612' of the groove 610' in a direction indicated by an arrow in FIG. 14B and then engages with the first stop 612', thereby locking the frame in the retracted state and avoiding loosening and disengagement. When the frame is fully retracted, the longitudinal direction of the front leg upper part 132 is substantially perpendicular to the ground. Similarly, an extension direction of the first stop 612' and the extension direction of the second stop 622' are also is also substantially perpendicular to the ground. Moreover, in the fully retracted state of the frame, the frame retraction locking mechanism 60' and front and rear wheels are at different sides of the frame, which can better play a locking role.

When the frame needs to be deployed, force may be exerted in a reverse direction of the direction indicated by the arrow shown in FIG. 14B and cause the second stop 622' to disengage from the first stop 612', thereby allowing the handlebar upper part 122 to pivot away from the front leg upper part 132, and deploying the entire frame.

The frame retraction locking mechanism 60, 60' according to the present disclosure has a simple and compact structure, does not occupy additional space, and can also ensure the retracted state of the frame 10, avoiding accidental deployment.

The child carrying device 1 according to the present disclosure may also be provided with a frame gripping mechanism 80, so that a user may grip the frame 10 in the fully retracted state and then lift the frame 10 for easy carrying of the frame 10, avoiding the user's hands from being cutting when lifting the frame 10, increasing the comfort of use, and maintaining a simple appearance of the frame 10.

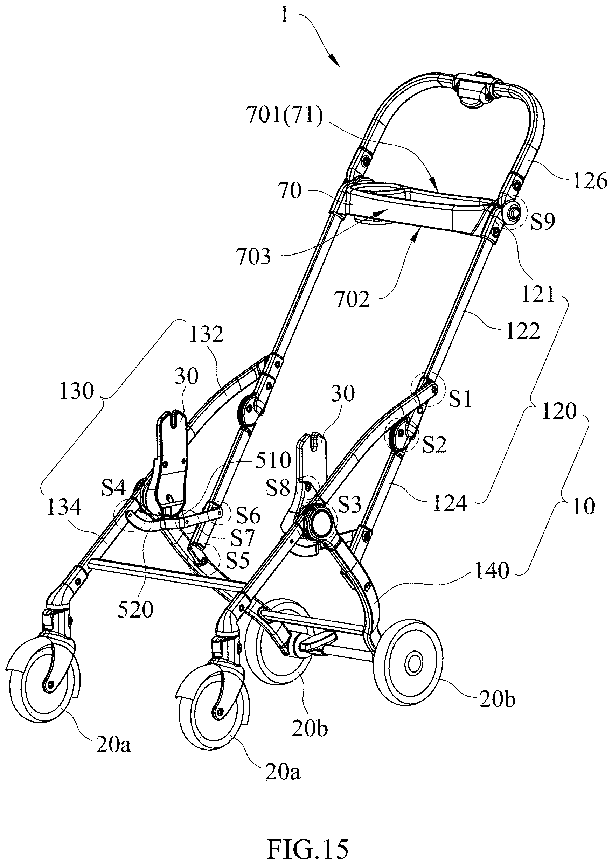

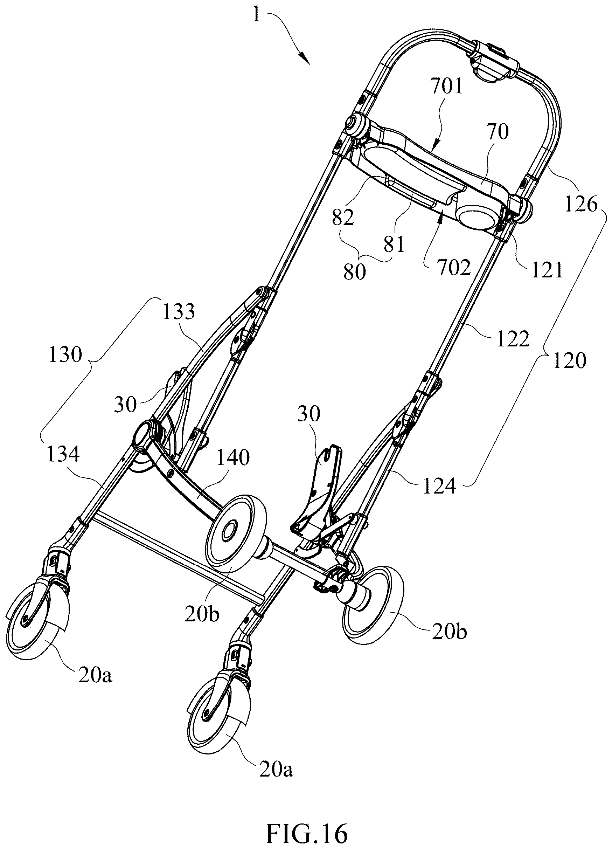

FIGS. 15 to 18B are schematic views of a child carrying device and/or its components according to yet another embodiment of the present disclosure. The drive member 510 is omitted in FIGS. 15 to 18B, but a connecting base retracting mechanism 50 of the child carrying device shown in FIGS. 15 to 18B is identical to the connecting base retracting mechanism 50 of the child carrying device shown in FIGS. 1 to 12, and includes the drive member 510 and the linkage member 520.

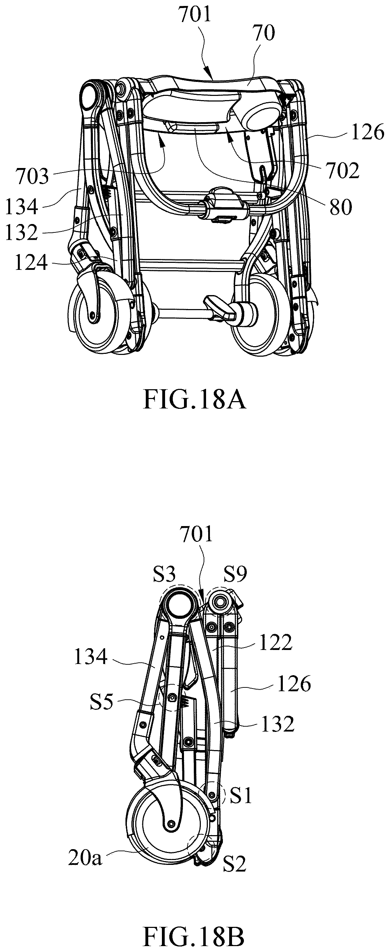

In the embodiment shown in FIGS. 15 to 18B, the handlebar assembly 120 further includes a handlebar grip 126, and the handlebar grip 126 and the handlebar upper portion 122 are pivotally connected at a ninth pivot point S9. Referring to FIG. 15, in a fully deployed state of the frame 10, the pivot point (i.e., the ninth pivot point S9) between the handlebar grip 126 and the handlebar upper part 122 is above the first pivot point S 1. When force is exerted on the handlebar upper part 122 or the front leg lower part 134 to retract the frame 10, the handlebar grip 126 and the handlebar upper part 122 also pivot and retract toward each other through the ninth pivot point S9. Referring to FIG. 18B, in a fully retracted state of the frame 10, the first pivot point S1, the third pivot point S3, the fifth pivot point S5, and the ninth pivot point S9 are above the second pivot point S2, and the third pivot point S3 and the fifth pivot point S5 are in front of the first pivot point S1, the second pivot point S2, and the ninth pivot point S9.

In this embodiment, the handlebar assembly 120 further includes a handlebar base 121 pivotally connected to the ninth pivot point S9. The tray 70 configured to accommodate items such as water bottles is connected to the frame 10 through the handlebar base 121. When force is exerted on the handlebar upper part 122 or the front leg lower part 134 to retract the frame 10, the tray 70 rotates as the handlebar grip 126 and the handlebar upper part 122 pivot and retract toward each other, forming an acute angle to a placement surface of the frame 10. Specifically, the tray 70 has a first side 701 (e.g., a top side) and a second side 702 (e.g., a bottom side) oppositely disposed. A holding surface 71 of the tray 70, which is configured to hold items such as water bottles, is at the first side 701. As shown in FIG. 15, in the fully deployed state of the frame 10, the holding surface 71 of the tray 70 substantially faces away from the wheels 20a, 20b and is substantially parallel to the placement surface of the frame 10. As shown in FIG. 18A and FIG. 18B, in the fully retracted state of the frame 10, the holding surface 71 of the tray 70 also substantially faces away from the retracted wheels 20a and 20b, and forms an acute angle to the placement surface of the frame 10.

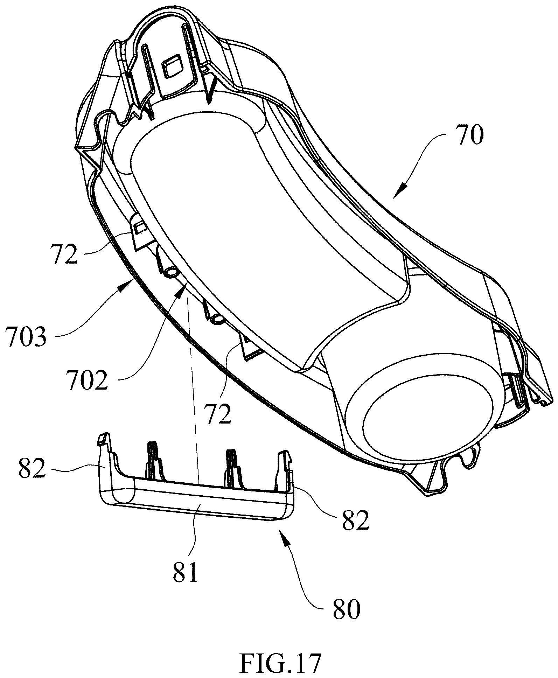

The frame gripping mechanism 80 is at the second side 702 of the tray 70. As shown in FIGS. 14 and 17, the frame gripping mechanism 80 includes a main body 81 and a connecting portion 82. The main body 81 serves as a handle for the user's fingers to grip, and extends along the left-right direction of the frame 10. Two ends of the main body 81 are fixed to the second side 702 of the tray 70 via two connecting portions 82. The two connecting portions 82 are for example elastic fingers, and are respectively engaged with two fixing holes 72 correspondingly disposed at the second side 702 of the tray 70.

In the fully deployed state of the frame 10, a front surface 703 of the tray 70 hides the frame gripping mechanism 80, so that in the fully deployed state of the frame 10, the frame gripping mechanism 80 will not affect the appearance of the frame. In the fully retracted state of the frame 10, the tray 70 forms the acute angle to the placement surface of the frame 10, causing the frame gripping mechanism 80 to tilt downward and rearward, thereby making it convenient for the user to lift the frame by gripping the frame gripping mechanism 80.

Further features, aspects and embodiments are provided below in the following items:
Item 1. A child carrying device, comprising:
   a frame;
   a connecting base, pivotally connected to the frame; and
   a connecting base retracting mechanism, connected between the frame and the connecting base, and comprising a linkage member and a drive member pivotally connected to each other, to allow the connecting base to retract with retraction of the frame and deploy with deployment of the frame, wherein:
      a first end of the linkage member is pivotally connected to a front leg assembly of the frame, and a second end of the linkage member is pivotally connected to a handlebar assembly of the frame; and a first end of the drive member is pivotally connected to the connecting base, and a second end of the drive member is pivotally connected to the linkage member.
Item 2. The child carrying device according to Item 1, wherein:
   the first end of the linkage member is pivotally connected to the front leg assembly of the frame, and the second end of the linkage member is pivotally connected to the handlebar assembly of the frame; and
   a first end of the drive member is pivotally connected to the connecting base, and a second end of the drive member is pivotally connected to the front leg assembly or the handlebar assembly.
Item 3. The child carrying device according to Item 1, wherein the frame comprises: the handlebar assembly, comprising a handlebar upper part and a handlebar lower part pivotally connected to each other;
   the front leg assembly, comprising a front leg upper part and a front leg lower part pivotally connected to each other, the front leg assembly being pivotally connected to the handlebar assembly; and
   a rear leg, pivotally connected to the handlebar assembly and the front leg assembly, wherein the linkage member of the connecting base retracting mechanism is connected between the front leg lower part and the handlebar lower part.
Item 4. The child carrying device according to Item 3, wherein the handlebar upper part and the front leg upper part are pivotally connected at a first pivot point; the handlebar upper part and the handlebar lower part are pivotally connected at a second pivot point;
   the front leg upper part, the front leg lower part, and the rear leg are pivotally connected at a third pivot point;
   the front leg lower part and the first end of the linkage member are pivotally connected at a fourth pivot point; the handlebar lower part and the rear leg are pivotally connected at a fifth pivot point;
   the handlebar lower part and the second end of the linkage member are pivotally connected at a sixth pivot point;
   the second end of the drive member and the linkage member are pivotally connected at a seventh pivot point; and the first end of the drive member and the connecting base are pivotally connected at an eighth pivot point;
   during retraction of the frame, the first pivot point to the sixth pivot point perform associated movement and retraction, and associated movement and retraction of the drive member and the connecting base are driven by the seventh pivot point and the eighth pivot point.
Item 5. The child carrying device according to Item 1, further comprising a frame retraction locking mechanism, wherein the frame retraction locking mechanism comprises:
   a fixing base located on one of the front leg assembly and the handlebar assembly of the frame of the child carrying device; and
   a retraction locking member pivotally connected to the other of the front leg assembly and the handlebar assembly and configured to accommodate the fixing base when the frame is retracted.
Item 6. The child carrying device according to Item 5, wherein the retraction locking member comprises:
   a snapping portion configured to accommodate the fixing base when the frame is retracted; and
   a pivoting portion, the snapping portion and the pivoting portion being at opposite two ends of the retraction locking member, and the retraction locking member being pivotally connected to one of the front leg assembly and the handlebar assembly via the pivoting portion.
Item 7. The child carrying device according to Item 6, wherein the retraction locking member further comprises:
   a pressure applying portion arranged at an outer periphery of the pivoting portion and inclined downward in a direction pivoting toward the fixing base.
Item 8. The child carrying device according to Item 5, wherein the frame retraction locking mechanism further comprises:
   an elastic member configured to cause the retraction locking member to always pivot in a direction toward the fixing base to accommodate the fixing base.
Item 9. The child carrying device according to Item 1, further comprising a frame retraction locking mechanism, wherein the frame retraction locking mechanism comprises:
   a cushion block, located on one of the front leg assembly and the handlebar assembly of the frame of the child carrying device; and
   a groove, located on the other of the front leg assembly and the handlebar assembly of the frame of the child carrying device, and configured to be fitted with the cushion block to lock the frame in a retracted state during retraction of the frame.
Item 10. The child carrying device according to Item 9, wherein:
   the groove is located on an inner side surface of a front leg upper part of the front leg assembly and provided with a first stop;
   the cushion block is on an outer side surface of a handlebar upper part of the handlebar assembly and provided with a second stop; and
   the second stop passes over the first stop and then engages with the first stop to lock the frame in the retracted state during retraction of the frame.
Item 11. The child carrying device according to Item 1, further comprising:
   a tray, located between rods at left and right sides of the handlebar assembly and configured to rotate with the retraction of the frame; and
   a frame gripping mechanism arranged on the tray,
   wherein the frame has a deployed state and a retracted state, and the frame gripping mechanism is hidden at a bottom side of the tray in the deployed state of the frame.
Item 12. The child carrying device according to Item 11, wherein the frame gripping mechanism comprises a main body extending along a left-right direction of the frame, and two ends of the main body are fixed to the bottom side of the tray via two connecting portions.

## Claims

1. A child carrying device (1), comprising:
a frame (10);
a connecting base (30), pivotally connected to the frame (10); and
a connecting base retracting mechanism (50), connected between the frame (10) and the connecting base (30), and comprising a linkage member (520) and a drive member (510) pivotally connected to each other, to allow the connecting base (30) to retract with retraction of the frame (10) and deploy with deployment of the frame (10),
wherein:
a first end (522) of the linkage member (520) is pivotally connected to a front leg assembly (130) of the frame (10), and a second end (524) of the linkage member (520) is pivotally connected to a handlebar assembly (120) of the frame (10); and
a first end (512) of the drive member (510) is pivotally connected to the connecting base (30), and a second end (514) of the drive member (510) is pivotally connected to the linkage member (520).

2. A child carrying device (1), comprising:
a frame (10);
a connecting base (30), pivotally connected to the frame (10); and
a connecting base retracting mechanism (50), connected between the frame (10) and the connecting base (30), and comprising a linkage member (520) and a drive member (510) pivotally connected to each other, to allow the connecting base (30) to retract with retraction of the frame (10) and deploy with deployment of the frame (10),
wherein:
a first end (522) of the linkage member (520) is pivotally connected to a front leg assembly (130) of the frame (10), and a second end (524) of the linkage member (520) is pivotally connected to a handlebar assembly (120) of the frame (10); and
a first end (512) of the drive member (510) is pivotally connected to the connecting base (30), and a second end (514) of the drive member (510) is pivotally connected to the front leg assembly (130) or the handlebar assembly (120).

3. The child carrying device (1) according to claim 1 or 2, wherein the frame (10) comprises:
the handlebar assembly (120), comprising a handlebar upper part (122) and a handlebar lower part (124) pivotally connected to each other;
the front leg assembly (130), comprising a front leg upper part (132) and a front leg lower part (134) pivotally connected to each other, the front leg assembly (130) being pivotally connected to the handlebar assembly (120); and
a rear leg (140), pivotally connected to the handlebar assembly (120) and the front leg assembly (130),
wherein the linkage member (520) of the connecting base retracting mechanism (50) is connected between the front leg lower part (134) and the handlebar lower part (124).

4. The child carrying device (1) according to claim 3, wherein the handlebar upper part (122) and the front leg upper part (132) are pivotally connected at a first pivot point (S1); the handlebar upper part (122) and the handlebar lower part (124) are pivotally connected at a second pivot point (S2); the front leg upper part (132), the front leg lower part (134), and the rear leg (140) are pivotally connected at a third pivot point (S3); the front leg lower part (134) and the first end (522) of the linkage member (520) are pivotally connected at a fourth pivot point (S4); the handlebar lower part (124) and the rear leg (140) are pivotally connected at a fifth pivot point (S5); the handlebar lower part (124) and the second end (524) of the linkage member (520) are pivotally connected at a sixth pivot point (S6); the second end (514) of the drive member (510) and the linkage member (520) are pivotally connected at a seventh pivot point (S7); and the first end (512) of the drive member (510) and the connecting base (30) are pivotally connected at an eighth pivot point (S8);
during retraction of the frame (10), the first pivot point (S 1) to the sixth pivot point (S6) perform associated movement and retraction, and associated movement and retraction of the drive member (510) and the connecting base (30) are driven by the seventh pivot point (S7) and the eighth pivot point (S8).

5. The child carrying device (1) according to any one of claims 1 to 4, further comprising a frame retraction locking mechanism (60), wherein the frame retraction locking mechanism (60) comprises:
a fixing base (610) located on one of the front leg assembly (130) and the handlebar assembly (120) of the frame (10) of the child carrying device (1); and
a retraction locking member (620) pivotally connected to the other of the front leg assembly (130) and the handlebar assembly (120) and configured to accommodate the fixing base (610) when the frame (10) is retracted.

6. The child carrying device (1) according to claim 5, wherein the retraction locking member (620) comprises:
a snapping portion (621) configured to accommodate the fixing base (610) when the frame (10) is retracted; and
a pivoting portion (622), the snapping portion (621) and the pivoting portion (622) being at opposite two ends of the retraction locking member (620), and the retraction locking member (620) being pivotally connected to one of the front leg assembly (130) and the handlebar assembly (120) via the pivoting portion (622).

7. The child carrying device (1) according to claim 6, wherein the retraction locking member (620) further comprises:
a pressure applying portion (623) arranged at an outer periphery of the pivoting portion (622) and inclined downward in a direction pivoting toward the fixing base (610).

8. The child carrying device (1) according to claims 5 to 7, wherein the frame retraction locking mechanism (60) further comprises:
an elastic member (630) configured to cause the retraction locking member (620) to always pivot in a direction toward the fixing base (610) to accommodate the fixing base (610).

9. The child carrying device (1) according to any one of claims 1 to 8, further comprising a frame retraction locking mechanism (60'), wherein the frame retraction locking mechanism (60') comprises:
a cushion block (620'), located on one of the front leg assembly (130) and the handlebar assembly (120) of the frame (10) of the child carrying device (1); and
a groove (610'), located on the other of the front leg assembly (130) and the handlebar assembly (120) of the frame (10) of the child carrying device (1), and configured to be fitted with the cushion block (620') to lock the frame (10) in a retracted state during retraction of the frame (10).

10. The child carrying device (1) according to claim 9, wherein:
the groove (610') is located on an inner side surface of a front leg upper part (132) of the front leg assembly (130) and provided with a first stop (612');
the cushion block (620') is on an outer side surface of a handlebar upper part (122) of the handlebar assembly (120) and provided with a second stop (622'); and
the second stop (622') passes over the first stop (612') and then engages with the first stop (612') to lock the frame (10) in the retracted state during retraction of the frame (10).

11. The child carrying device (1) according to any one of claims 1 to 10, further comprising:
a tray (70), located between rods at left and right sides of the handlebar assembly (120) and configured to rotate with the retraction of the frame (10); and
a frame gripping mechanism (80) arranged on the tray (70),
wherein the frame (10) has a deployed state and a retracted state, and the frame gripping mechanism (80) is hidden at a bottom side of the tray (70) in the deployed state of the frame (10).

12. The child carrying device (1) according to claim 11, wherein the frame gripping mechanism (80) comprises a main body (81) extending along a left-right direction of the frame (10), and two ends of the main body (81) are fixed to the bottom side of the tray (70) via two connecting portions (82).
